(19) Europäisches Patentamt
European Patent Office
Office européen des brevets

(11) **EP 0 833 463 B1**

(12) **EUROPÄISCHE PATENTSCHRIFT**

(45) Veröffentlichungstag und Bekanntmachung des Hinweises auf die Patenterteilung:
**08.03.2006 Patentblatt 2006/10**

(51) Int Cl.:
*H04B 7/26* (2006.01)    *H04J 3/06* (2006.01)
*H04B 7/155* (2006.01)

(21) Anmeldenummer: **97116802.6**

(22) Anmeldetag: **26.09.1997**

(54) **Verfahren zur Aktionssteuerung in einem Zeitschlitzverfahren**

Method for action control in a time slot method

Procédé de commande d'actions dans un procédé à fenêtre temporelle

(84) Benannte Vertragsstaaten:
**DE FR GB IT**

(30) Priorität: **30.09.1996 DE 19640315**

(43) Veröffentlichungstag der Anmeldung:
**01.04.1998 Patentblatt 1998/14**

(73) Patentinhaber: **Infineon Technologies AG**
**81669 München (DE)**

(72) Erfinder:
• **Boetzel, Ulrich**
**41564 Kaarst (DE)**
• **Hütwohl, Michael**
**45239 Essen (DE)**
• **Funke, Andreas**
**59071 Hamm (DE)**

(74) Vertreter: **Jannig, Peter**
**Jannig & Repkow,**
**Patentanwälte,**
**Klausenberg 20**
**86199 Augsburg (DE)**

(56) Entgegenhaltungen:
**EP-A- 0 186 229**          **EP-A- 0 722 229**

**Beschreibung**

Die Erfindung betrifft ein Verfahren gemäß dem Oberbegriff des Anspruchs 1.

Zeitschlitzverfahren kommen beispielsweise bei schnurlosen Telekommunikationssystemen auf der Basis einer digitalen Übertragungstechnik zum Tragen. Diese Telekommunikationssysteme verwenden als Zugriff auf das Spektrum Time Devision Multiple Access (TDMA). Die Erfindung ist beispielsweise für den DECT (= Digital Enhanced Cordless Telecommunications) Standard verwendbar.

Ein TDMA-Zeitschlitzverfahrenfunksystem erfordert für die zeitliche Steuerung von Aktionen in den einzelnen Zeitschlitzen Timer. Diese Timer werden im folgenden auch als Counter, Bitcounter oder Zähler bezeichnet. Diese können für Bit-, Zeitschlitz-, Rahmen- und Multirahmensynchronisation und - Zeit eingesetzt sein.

Aus dem Stand der Technik ist der DECT Multichannel Burst Mode Controller PMB 2727 ("MBMC") bekannt. Dieser Baustein enthält lediglich die Funktionalität einer Basisstation. In PMB 2727 ist ein Bitcounter für die Sendephase (= TX-Bitcounter) und ein Bitcounter für die Bmpfangsphase (=RX-Bitcounter) vorhanden. Damit werden die ersten 12 Sendezeitschlitze in ihrem zeitlichen Ablauf durch den TX-Bitcounter und die zweiten 12 Empfangszeitschlitze durch den RX-Bitcounter bestimmt. Hierbei tritt jedoch in der Empfangsphase immer das Problem auf, daß ein zu spät empfangener Zeitschlitz mit dem nächsten Zeitschlitz, der unter Umständen früh empfangen wird, kollidieren kann. Diese Kollision tritt nicht erst dann auf, wenn die Schutzzeit (= guard space) zwischen zwei Empfangszeitschlitzen aufgrund der Entfernung der Mobilteile ausgenutzt ist, sondern bereits dadurch, daß Empfangszeitschlitze vor ihrem Empfang durch Aufschalten des Empfängers bereits vorbereitet werden müssen.

Bei DECT besteht die Schutzzeitbitbreite aus 56 Bits. Hiervon gehen aufgrund der vorbereitenden Aufgabe für den zweiten Empfangszeitschlitz 12 Bits ab, die für das Einschalten des Empfängers verwendet werden. Abschließende Aufgaben für den vorhergehenden Zeitschlitz stehen bis etwa Bit-Nr. 436 an. Damit verbleiben für die Entfernung zwischen Mobilteil und Basisstation 480 - 436 - 12 = 32 Bits. Eine optimale Basisstation sollte jedoch die möglichen 56 Bits der Schutzzeitdauer nutzen können, ohne durch die Realisierung im Basisband beschränkt zu sein. Bei einem Repeater ist das aus dem PMB 2727 bekannte Verfahren nur unter sehr hohem Aufwand und mit großem Risiko bezüglich der Funktionsfähigkeit implementierbar.

Weitere Verfahren zur Aktionssteuerung in einem Zeitschlitzverfahren sind aus der BP 0186 229 A1 und der BP 0 772 229 A1 bekannt.

Die Aufgabe der Erfindung ist es, ein Verfahren anzugeben, das das Problem der Timer und der Bit- und Rahmensynchronisation löst.

Die Aufgabe wird durch ein Verfahren gemäß Anspruch 1 gelöst.

Ein Vorteil der Erfindung besteht in der einfachen Generierung der zeitpunkte, die zur Auslösung von Aktionen dienen. Durch die erfindungsgemäße Lösung wird ein einfaches exaktes Timing der einzelnen Aktionen möglich. Die zeitliche Abfolge der einzelnen Aktionen kann damit nach einem festen Muster erfolgen.

Das Verfahren gemäß Anspruch 2 hat den Vorteil, daß bereits während eines Zeitschlitzes Aktionen angestoßen werden können, deren zeitliches Auftreten exakt zum gewünschten Zeitpunkt erfolgen kann.

Das erfindungsgemäße Verfahren ist sowohl für Mobilteilstationen als auch für Repeater verwendbar.

Das Verfahren gemäß Anspruch 3 hat den Vorteil einer noch exakteren Festlegung des Zeitpunkts des Auftretens einer gewünschten Aktion.

Vorteilhafte Weiterbildungen ergeben sich aus den Unteransprüchen.

Die Erfindung wird im folgenden anhand zweier Figuren weiter beschrieben.

Figur 1     zeigt die DECT-Rahmenstruktur.

Figur 2     zeigt ein Zeitdiagramm für drei Bitcounter gemäß der Erfindung und eine Detailansicht in der Umgebung des S-Feldes.

Erfindungsgemäß umfaßt das Verfahren zur Aktionssteuerung 3 Bitcounter, nämlich einen Referenzbitcounter (= Referenzbitzähler oder Referenzzähler) einen Even-Bit-Working-Counter (= erster Arbeitszähler oder Arbeitszähler für Zeitschlitze mit geraden Zeitschlitznummern) und einen Odd-Bit-Working-Counter (= zweiter Arbeitszähler oder Arbeitsbitzähler für Zeitschlitze mit geraden Zeitschlitznummern). Bei einem bestimmten Zählerstand des Referenzbitcounters RefBC wird der Odd-Bit-Working-Counter OBWC, d.h. der Zähler für Zeitschlitze mit ungerader Zeitschlitznummer, mit einem bestimmten Wert (= Offset) geladen. Während eines Zeitschlitzes mit gerader Zeitschlitznummer wird bei einem bestimmten Zählerstand des Referenzbitcounters der Odd-Bit-Working-Counter OBWC, d.h. der Arbeitsbitzähler für Zeitschlitze mit ungerader Zeitschlitznummer, mit einem bestimmten Wert WCV2 geladen. Die Zählerstände der beiden Arbeitszähler OBWC, EBWC stehen somit in einem festen Bezug zum Zählerstand des Referenzbitcounters RefBC. Nun können zu bestimmten Zählerständen der Arbeitszähler bestimmte Aktionen ausgelöst werden.

Die Erfindung ist grundsätzlich für alle TDMA-Verfahren geeignet.

Im folgenden wird die Erfindung am Beispiel von DECT weiter beschrieben.

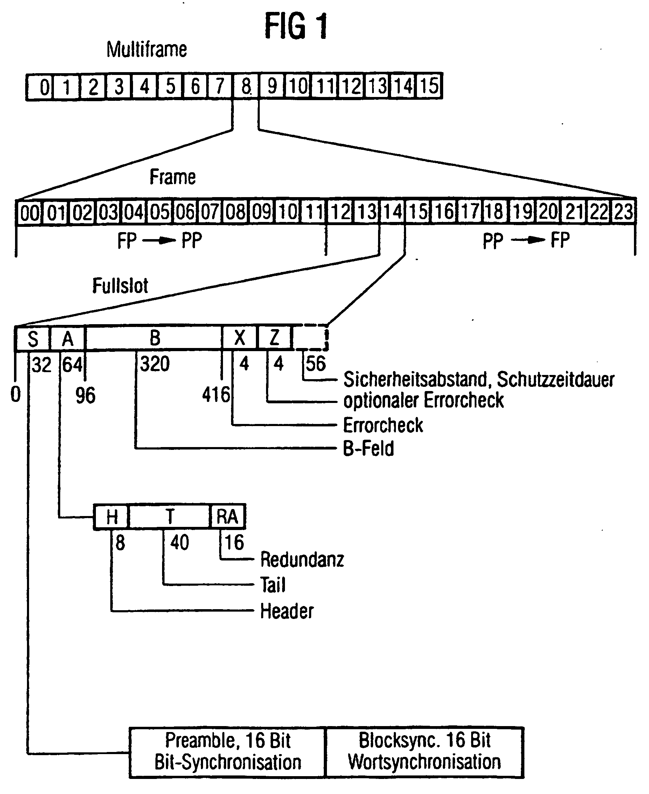

Figur 1 zeigt die DECT-Rahmenstruktur. Ein Multiframe beinhaltet 16 Frames. Ein Frame, auch als Rahmen bezeichnet, hat eine Rahmenzeitdauer von 10 ms, was 11.520 Bits entspricht. Der Frame ist in 2 • 12 gleich große Fullslots, im folgenden auch als slots oder Zeitschlitze bezeichnet, aufgeteilt. Diese sind in Figur 1 mit 00, 01, 02, ... 23 bezeichnet. Die Basisstation, auch als Fixpart FP bezeichnet, sendet die ersten 5 ms an die Mobilteile, die auch als Handgeräte oder portable parts PP bezeichnet werden. In den zweiten 5 ms empfängt die Basisstation die Daten von den Mobilteilen PP. In einem Mobilteil PP ist diese Reihenfolge umgekehrt, d.h. es werden 5 ms lang (= 12 Zeitschlitze) empfangen und dann 5 ms (= 12 Zeitschlitze) gesendet. Jeweils ein Paar Zeitschlitze (senden und empfangen) im Abstand von 12 Zeitschlitzen bildet eine Verbindung (= Kanal).

Jeder Zeitschlitz dauert 416 μs, was 480 Bits entspricht. Ein Zeitschlitz ist aufgeteilt in ein 32 Bit breites Synchronisationsfeld S, nachfolgend auch SyncFeld genannt, ein 64 Bit breites A-Feld, das zur Signalisierung dient, ein 320 Bit breites B-Feld, das die Sprachdaten enthält, ein 4 Bit breites X-Feld, ein 4 Bit breites Z-Feld und ein etwa 50 μs (56 Bits) andauerndes Sicherheitsfeld auch als guard space oder Schutzzeitdauer bezeichnet.

Das X-Feld dient dem Errorcheck über 84 Bits im B-Feld, wenn das B-Feld ungeschützt ist. Das Z-Feld ist ein optionaler Errorcheck, erreicht durch Verdopplung des X-Felds.

Das S-Feld ist unterteilt in 16 Bits zur Bit-Synchronisation und weiteren 16 Bits zur Wort-Synchronisation.

Das A-Feld besteht aus einem Header H (8 Bit), einem Tail T (40 Bit) und der 16 Bit langen Redundanz. Weitere Einzelheiten der DECT-Rahmenstruktur können im European Telecommunication Standard ETS 300 175-2 und ETS 300 175-3 nachgelesen werden.

In einer Mobilstation PP werden genau 5 ms zwischen Empfang und Senden, gemessen an der Antenne, eingestellt. In der Basisstation FP wird zu einer festen Zeit gesendet, das Signal erhält über die Laufstrecke eine Verzögerung von n μs, wird von der Mobilstation PP empfangen und nach 5 ms gesendet, wobei wieder über die Luftstrecke eine Verzögerung von n μs auftritt und anschließend von der Basisstation FP empfangen. Hierbei ergibt sich als zeitlicher Abstand $\Delta t_{SE}$ zwischen dem Senden der Signale von der Basisstation FP und dem Empfangen der Signale an der Basisstation FP:

$$\Delta t_{SE} = 5ms + 2 \cdot n\mu s \ \text{(Verzögerungsdauer in Luft)}$$

Aus diesem Grund kann der Empfang in den Empfangszeitschlitzen abhängig von der Entfernung der Mobilstation PP unterschiedliche Zeitpunkte annehmen. Bei einer schnurlosen Nebenstellenanlage tritt dieser zeitliche Unterschied kaum zu Tage, da die Mobilteile PP in einer maximalen Entfernung von 300 m betrieben werden können und damit, bezogen auf DECT, maximal 1-2 Bit später als die erwarteten 5 ms Verzögerung auftreten. 150 m entsprechen ca 1 μs, was ca. 1 Bit entspricht.

In einer Applikation für die funkbezogene Anbindung von Telefonie-Teilnehmern sind die Laufzeiten in Luft jedoch wesentlich größer, so daß bei einer Entfernung von 3000 m zwischen Basisstation FP und Mobilteil PP eine Verzögerung von 20 Bits entsteht. Befindet sich dazu ein zweites Mobilteil PP in unmittelbarer Nähe der Basisstation FP, so werden die 12 Empfangszeitschlitze an der Basisstation FP zu stark unterschiedlichen Zeitpunkten empfangen.

Ein Repeater weist im Sinne von Basis- und Mobilstation die Möglichkeit auf, in allen 24 Zeitschlitzen eines Frames sowohl empfangen als auch senden zu können. D.h. auf einen Empfangszeitschlitz kann unmittelbar darauf ein Sendezeitschlitz folgen, dem wiederum ein Empfangszeitschlitz folgen kann. Da ein Repeater sowohl die Basisstationsfunktionalität als auch die Mobilteilsfunktionalität gewährleisten muß, muß der zeitlich korrekte Ablauf der Zeitschlitze sichergestellt werden.

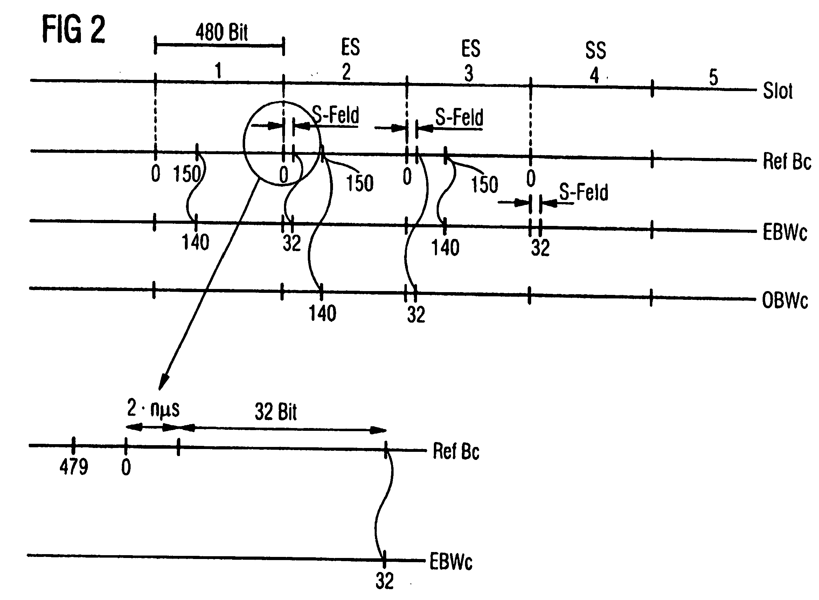

Figur 2 zeigt ein Zeitdiagramm für drei Bitcounter gemäß der Erfindung. Der Referenzbitcounter RefBC läuft, nur aufgrund von Rahmensynchronisationen verändert, ungestört von 0 bis 479 durch. In Zeitschlitzen mit geraden Zeitschlitznummern (slot 2, 4, 6 ...) wird der Odd-Bit-Working-Counter OBWC für den Zeitschlitz mit ungerader Zeitschlitznummer mit dem später benötigten Phasenversatz (Offset) zum Referenzbitcounter vorgeladen. Beispielsweise, wenn der Referenzbitcounter RefBC im Slot 2 auf dem Wert 150 steht, wird der Offset (=Working-Bit-Counter-Value 2 WCV2) mit 140 in den Odd-Bit-Working-Counter OBWC geladen. In gleicher Weise wird der Even-Bit-Working-Counter EBWC für den Zeitschlitz mit gerader Zeitschlitznummer im vorhergehenden Zeitschlitz vorgeladen, beispielsweise mit einem Offset von 140, wenn der Referenzbitcounter RefBC im Slot 3 auf 140 steht. Wird nun der Even-Bit-Working-Counter EBWC für den Empfang in einem Zeitschlitz benutzt, kann während des Empfangs in diesem Zeitschlitz der Odd-Bit-Working-Counter OBWC vorgeladen werden und während der Even-Bit-Working-Counter EBWC noch die Beendigung des vorhergehenden Zeitschlitzes durchführt, bearbeitet der Odd-Bit-Working-Counter OBWC bereits den nächsten Zeitschlitz. Durch dieses drei Bit counter aufweisende Konzept lassen sich auf einfache Weise Applikationen mit stark verzögerten Zeitschlitzen (Radio local loop) aufbauen. Mit dem Einsatz eines Funkteils, welches keine Einschwingzeit zwischen zwei Zeitschlitzen aufweist, kann aufgrund dieses Konzepts eine maximale Reichweite bei gegebener Schutzzeit (guard space) erzielt werden.

Bei Empfangsslots ES wird, sobald das SYNC-Feld erkannt wurde, der entsprechende Working-Bit-Counter OBWC beziehungsweise EBWC nachsynchronisiert, das heißt mit dem Wert 32 geladen. Die Erkennung des SYNC-Feldes erfolgt am Ende des SYNC-Feldes.

Bei Sendeslots SS bleibt die Phasenverschiebung zwischen RefBC und OBWC bzw. EBWC bestehen.

In Figur 2 ist ein Empfangszeitschlitz mit ES (Empfangsslot) und ein Sendezeitschlitz mit SS (Sendeslot) bezeichnet. $2 \cdot n\ \mu s$ nachdem der Referenzbitcounter RefBC auf Null steht, beginnt das S-Feld.

Ein Zeitschlitz kann ein Full-, Half- oder Doubleslot sein. Die Länge (Anzahl der Bits) der Slots ist dem DECT-Standard zu entnehmen. Beispielsweise hat ein Halfslot eine Länge von 240 Bits.

Ein Frame beinhaltet bei der Verwendung von Fullslots 24, bei Halfslots 48 und bei Doubleslots 12 Zeitschlitze. Ein Fullslot beginnt immer an einer Fullslotgrenze. Das Zeitraster für Halfslots ist auf 10ms/48 festgelegt.

Die Implementierung von Abweichungen von dem obenbeschriebenen Raster von 24 Zeitschlitzen bei DECT in Richtung von Double- oder Half-Zeitschlitzen ist hierdurch möglich.

Die hier verwendete Nummerierung der Slots weicht von der standardisierten DECT-Nummerierung ab.

Die Erfindung ist auf auf den TDMA-Standard PWT (Personal Wireless Telecommunications) anwendbar, der in den USA unter TIA/EIA-622 standardisiert ist. PWT ist ein Derivat des DECT-Standards. Der wesentliche Unterschied zwischen PWT und DECT besteht in dem Physical-Layer. Waehrend DECT eine GFSK-Modulation verwendet und den Frequenz-Bereich bei 1880-1900MHz (10 Kanaele) hat, arbeitet PWT mit einer Pi/4-D-QPSK-Modulation im Frequenz-Bereich 1910-1930MHz (16 Kanaele). Aufgrund des unterschiedlichen Modulationsverfahrens ist das Sync-Wort gegenueber dem DECT-Sync-Wort geaendert. Die Slot und Rahmen-Struktur (A-, B-Feld, XCRC, Z-Feld, 24 Full-Slots etc.) ist ansonsten identisch zu DECT. Damit sind sämtliche Loesungsvorschlaege, die die Zeitschlitzsynchronisation betreffen (Bit-Counter-Konzepte) sowohl fuer DECT als auch fuer PWT anwendbar.

Bezugszeichenliste

RefBC =    Referenzbitcounter
OBWC =    Odd-Bit-Working-Counter
EBWC =    Even-Bit-Working-Counter
WCV1 =    Working-Bit-Counter-Value 1
WCV2 =    Working-Bit-Counter-Value 2
FP =    Fixed part
PP =    Portable part
S =    SYNC-Feld
A =    A-Feld
B =    B-Feld
X =    Errorcheck
Z =    optionaler Errorcheck
H =    Header
T =    Tail
RA =    Redundanz
ES =    Empfangsslot
SS =    Sendeslot

**Patentansprüche**

1. Verfahren zur Aktionssteuerung in einem Zeitschlitzverfahren,
   **dadurch gekennzeichnet,**

   - **daß** ein Referenzzähler (RefBC) vorgesehen wird,
   - **daß** ein erster Arbeitszähler (EBWC) für Aktionen in Zeitschlitzen mit geraden Zeitschlitznummern vorgesehen wird,
   - **daß** ein zweiter Arbeitszähler (OBWC) für Aktionen in Zeitschlitzen mit ungeraden Zeitschlitznummern vorgesehen wird,
   - **daß** zu einem bestimmten Zählerstand des Referenzzählers (RefBC) während eines Zeitschlitzes mit ungerader Zeitschlitznummer in den ersten Arbeitszähler (EBWC) ein bestimmter Wert (WCV1) geladen wird,

- **daß** zu einem bestimmten Zählerstand des Referenzzählers (RefBC) während eines Zeitschlitzes mit gerader Zeitschlitznummer in den zweiten Arbeitszähler (OBWC) ein bestimmter Wert (WCV2) geladen wird, und
- **daß** zu bestimmten Zählerständen der Arbeitszähler (EBWC, OBWC) bestimmte Aktionen auslösbar werden.

**2.** Verfahren nach Anspruch 1,

- bei dem der Wert (WCV1, WCV2), der in den Arbeitszähler (EBWC, OBWC) geladen wird, aus der Entfernung eines Basisteils (FP) zu einem Mobilteil oder zu einem Repeater (PP) bestimmt wird.

**3.** Verfahren nach Anspruch 1 oder 2,

- bei dem die Arbeitszähler (EBWC, OBWC) mit dem Empfang der jeweiligen Synchronisationsfelder nachsynchronisiert werden.

**Claims**

**1.** Method for action control in a time slot method, **characterized**

- **in that** a reference counter (RefBC) is provided,
- **in that** a first working counter (EBWC) is provided for actions in time slots with even time slot numbers,
- **in that** a second working counter (OBWC) is provided for actions in time slots with odd time slot numbers,
- **in that** the first working counter (EBWC) is loaded with a specific value (WCV1) when the reference counter (RefBC) reaches a specific count during a time slot with an odd time slot number,
- **in that** the second working counter (OBWC) is loaded with a specific value (WCV2) when the reference counter (RefBC) reaches a specific count during a time slot with an even time slot number, and
- **in that** specific actions can be initiated when the working counters (EBWC, OBWC) reach specific counts.

**2.** Method according to Claim 1,

- in which the value (WCV1, WCV2) which is loaded in the working counter (EBWC, OBWC) is determined from the distance between a base part (FP) and a mobile part or a repeater (PP).

**3.** Method according to Claim 1 or 2,

- in which the working counters (EBWC, OBWC) are resynchronized with the reception of the respective synchronization fields.

**Revendications**

**1.** Procédé de commande d'actions dans un procédé à fenêtre temporelle, **caractérisé en ce que**:

- il prévoit un compteur de référence (RefBC),
- il prévoit un premier compteur de travail (EBWC) pour les actions dans des fenêtres temporelles dont le numéro de fenêtre est pair,
- il prévoit un deuxième compteur de travail (OBWC) pour des actions dans des fenêtres temporelles dont le numéro de fenêtre est impair,
- lorsque le compteur de référence (RefBC) est à un état défini pendant une fenêtre temporelle dont le numéro de fenêtre est impair, une valeur définie (WCV1) est chargée dans le premier compteur de travail (EBWC),
- lorsque le compteur de référence (RefBC) est à un état défini pendant une fenêtre temporelle dont le numéro de fenêtre est pair, une valeur définie (WCV2) est chargée dans le deuxième compteur de travail (OBWC) et
- des actions définies peuvent être lancées lorsque les compteurs de travail (EBWC, OBWC) sont à des états définis.

**2.** Procédé selon la revendication 1, dans lequel la valeur (WCV1, WCV2) qui est chargée dans le compteur de travail (EBWC, OBWC) est déterminée à partir de la distance entre un poste de base (FP) et un poste mobile ou un répéteur (PP).

3. Procédé selon les revendications 1 ou 2, dans lequel les compteurs de travail (EBWC, OBWC) sont resynchronisés après la réception des parties de synchronisation concernées.

# FIG 1

Multiframe

| 0 | 1 | 2 | 3 | 4 | 5 | 6 | 7 | 8 | 9 | 10 | 11 | 12 | 13 | 14 | 15 |

Frame

| 00 | 01 | 02 | 03 | 04 | 05 | 06 | 07 | 08 | 09 | 10 | 11 | 12 | 13 | 14 | 15 | 16 | 17 | 18 | 19 | 20 | 21 | 22 | 23 |

FP → PP                          PP → FP

Fullslot

| S | A | B | X | Z | |

0    32  64    320    4   4   56

96              416

— Sicherheitsabstand, Schutzzeitdauer
— optionaler Errorcheck
— Errorcheck
— B-Feld

| H | T | RA |

8    40    16

— Redundanz
— Tail
— Header

| Preamble, 16 Bit Bit-Synchronisation | Blocksync. 16 Bit Wortsynchronisation |

FIG 2

EP 0 833 463 B1